(19) Europäisches Patentamt
European Patent Office
Office européen des brevets

(11) EP 3 922 659 A1

(12) **EUROPÄISCHE PATENTANMELDUNG**

(43) Veröffentlichungstag:
**15.12.2021 Patentblatt 2021/50**

(51) Int Cl.:
***C08G 64/34*** *(2006.01)* ***C08G 65/26*** *(2006.01)*

(21) Anmeldenummer: **20178763.7**

(22) Anmeldetag: **08.06.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYETHERCARBONATPOLYOLEN**

(57) Gegenstand der Erfindung ist ein Verfahren zur Herstellung von Polyethercarbonatpolyolen durch Anlagerung von Alkylenoxid und Kohlendioxid an H-funktioneller Startersubstanz in Gegenwart eines DMC-Katalysators oder eines Metallkomplexkatalysators auf Basis der Metalle Zink und/oder Cobalt, dadurch gekennzeichnet, dass
die Anlagerung unter einer Atmosphäre aus einem Gasgemisch enthaltend 12,0 Vol.-% bis 85,0 Vol.-% Kohlendioxid und 15,0 Vol.-% bis 88,0 Vol.-% mindestens eines weiteren Gases, jeweils bezogen auf das Volumen des Gasgemisches, erfolgt.

EP 3 922 659 A1

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen, wobei ein Gasgemisch enthaltend $CO_2$ und mindestens ein weiteres Gas eingesetzt wird.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

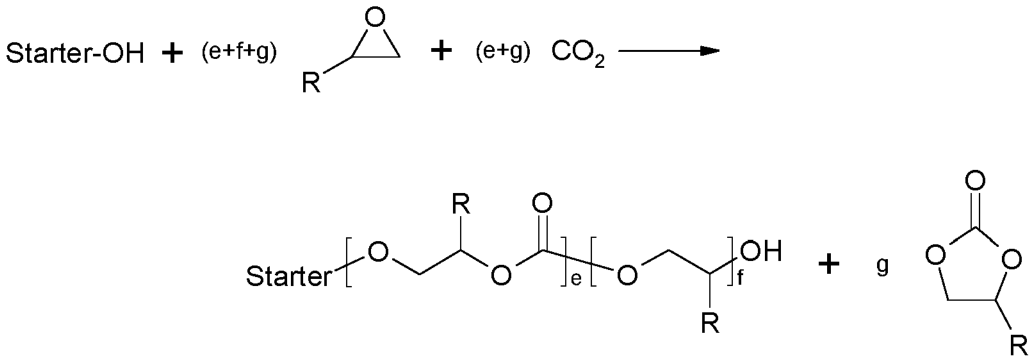

(I)

Da Propylencarbonat einen außerordentlich hohen Siedepunkt von 240 °C bei Normaldruck aufweist, ist dessen Abtrennung aus dem Reaktionsgemisch aufwendig und zeitintensiv. Es ist daher wünschenswert, ein Verfahren zur Copolymerisation von Epoxiden mit Kohlendioxid zu entwickeln, wobei möglichst geringe Mengen an cyclischem Carbonat (wie beispielsweise Propylencarbonat) gebildet werden.

In WO 2017/158114 A1 wird ein Verfahren zur Herstellung von Polyethercarbonatpolyolen durch Anlagerung von Kohlenstoffdioxid und Alkylenoxiden an H-funktionelle Startersubstanzen offenbart. In den Beispielen wird gezeigt, dass der Einsatz von Kohlenstoffdioxid mit einer Reinheit von 99,9000 bis 99,9449 Vol.-% $CO_2$ zu einer besseren Selektivität bei der Herstellung von Polyethercarbonatpolyolen führt als Kohlendioxid mit einer höheren Reinheit.

Aufgabe der vorliegenden Erfindung ist die Bereitstellung eines ökonomischeren Verfahrens, mit dem Polyethercarbonatpolyole mit verbesserter Selektivität (d.h. möglichst niedriges Verhältnis von cyclischem Carbonat zu linearem Polyethercarbonatpolyol) hergestellt werden können.

Überraschenderweise wurde nun gefunden, dass diese Aufgabe gelöst wird durch ein Verfahren zur Herstellung von Polyethercarbonatpolyolen durch Anlagerung von Alkylenoxid und Kohlendioxid an H-funktioneller Startersubstanz in Gegenwart eines DMC-Katalysators oder eines Metallkomplexkatalysators auf Basis der Metalle Zink und/oder Cobalt, dadurch gekennzeichnet, dass

die Anlagerung unter einer Atmosphäre aus einem Gasgemisch enthaltend 12,0 Vol.-% bis 85,0 Vol.-% Kohlendioxid und 15,0 Vol.-% bis 88,0 Vol.-% mindestens eines weiteren Gases, jeweils bezogen auf das Volumen des Gasgemisches, erfolgt.

In einer bevorzugten Ausführungsform betrifft die Erfindung ein Verfahren zur Herstellung von Polyethercarbonatpolyolen durch Anlagerung von Alkylenoxid und Kohlendioxid an H-funktioneller Startersubstanz in Gegenwart eines DMC-Katalysators oder eines Metallkomplexkatalysators auf Basis der Metalle Zink und/oder Cobalt, dadurch gekennzeichnet, dass

die Anlagerung unter einer Atmosphäre aus einem Gasgemisch enthaltend 12,0 Vol.-% bis 85,0 Vol.-% Kohlendioxid und 15,0 Vol.-% bis 88,0 Vol.-% mindestens eines weiteren Gases, jeweils bezogen auf das Volumen des Gasgemisches, erfolgt, und wobei

($\alpha$) gegebenenfalls eine Teilmenge der H-funktionellen Startersubstanz und/oder Suspensionsmittel, das keine H-funktionellen Gruppen enthält, in einem Reaktor jeweils gegebenenfalls gemeinsam mit DMC-Katalysator und/oder einem Metallkomplexkatalysator auf Basis der Metalle Zink und/oder Cobalt vorgelegt wird,

(β) gegebenenfalls zu dem Gemisch aus Schritt (α) eine Teilmenge an Alkylenoxid bei Temperaturen von 90 bis 150°C zugegeben wird, und wobei dann die Zugabe des Alkylenoxids unterbrochen wird ("Aktivierung"),

(γ) Alkylenoxid und Kohlendioxid an eine H-funktionelle Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird ("Copolymerisation"),

(δ) gegebenenfalls das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird.

Beim erfindungsgemäßen Verfahren erfolgt die Anlagerung von Kohlenstoffdioxid und Alkylenoxid unter einer Atmosphäre aus einem Gasgemisch enthaltend 12,0 Vol.-% bis 85,0 Vol.-% Kohlendioxid und 15,0 Vol.-% bis 88,0 Vol.-% mindestens eines weiteren Gases, jeweils bezogen auf das Volumen des Gasgemisches. Bevorzugt enthält das Gasgemisch 14,0 Vol.-% bis 75,0 Vol.-% Kohlendioxid und 25,0 Vol.-% bis 86,0 Vol.-% mindestens eines weiteren Gases, besonders bevorzugt 20,0 Vol.-% bis 70,0 Vol.-% Kohlendioxid und 30,0 Vol.-% bis 80,0 Vol.-% mindestens eines weiteren Gases, insbesondere 20,0 Vol.-% bis 60,0 Vol.-% Kohlendioxid und 40,0 Vol.-% bis 80,0 Vol.-% mindestens eines weiteren Gases. Als weitere Gase können beispielsweise Stickstoff ($N_2$), Kohlenstoffmonoxid, Edelgase wie Argon oder Gasgemische wie Formiergas ($N_2$/$H_2$-Gasgemisch) eingesetzt werden. Bevorzugt enthält das Gasgemisch als weitere Gase mindestens eine Verbindung aus der Gruppe bestehend aus Kohlenstoffmonoxid, Stickstoff, Edelgase und Wasserstoff.
In einer besonders bevorzugten Ausführungsform enthält das Gasgemisch als weitere Gase mindestens eine Verbindung aus der Gruppe bestehend aus Kohlenstoffmonoxid, Stickstoff, Edelgase und Wasserstoff und 10,0 Vol.-% oder weniger, bezogen auf das Volumen des Gasgemisches, eines oder mehrere Gase, die unterschiedlich zu den vorgenannten sind. Besonders bevorzugt beträgt der Anteil eines oder mehrere Gase die unterschiedlich zu Kohlenstoffmonoxid, Stickstoff, Edelgase und Wasserstoff sind 5,0 Vol.-% oder weniger, insbesondere bevorzugt 1,0 Vol.-% oder weniger, jeweils bezogen auf das Volumen des Gasgemisches. In einer besonders bevorzugten Ausführungsform besteht das Gasgemisch aus 25,0 Vol.-% bis 85,0 Vol.-% Kohlendioxid, 15,0 Vol.-% bis 75,0 Vol.-% mindestens einer Verbindung aus der Gruppe bestehend aus Kohlenstoffmonoxid, Stickstoff, Edelgase und Wasserstoff und 1,0 Vol.-%oder weniger jeweils bezogen auf das Volumen des Gasgemisches, eines oder mehrerer Gase die unterschiedlich zu den vorgenannten sind,.
Es können sowohl das erfindungsgemäße Gasgemisch in den Reaktor dosiert werden als auch die einzelnen Bestandteile des Gasgemisches separat in den Reaktor dosiert werden, wobei das erfindungsgemäße Gasgemisch im Reaktor gebildet wird.
Überraschenderweise wurde gefunden, dass bei dem erfindungsgemäßen Verfahren zur Herstellung von Polyethercarbonatpolyolen eine verbesserte Selektivität (d.h. möglichst niedriges Verhältnis von cyclischem Carbonat zu linearem Polyethercarbonatpolyol) erreicht wird, wenn ein erfindungsgemäßes Gasgemisch eingesetzt wird.

Charakteristisch für die erfindungsgemäß in Gegenwart eines Doppelmetallcyanid (DMC)-Katalysators hergestellten Polyethercarbonatpolyole ist, dass diese zwischen den Carbonatgruppen auch Ethergruppen enthalten. In Bezug auf Formel (Ia) bedeutet dies, dass das Verhältnis von e/f bevorzugt von 2 : 1 bis 1 : 20, besonders bevorzugt von 1,5 : 1 bis 1 : 10 beträgt.

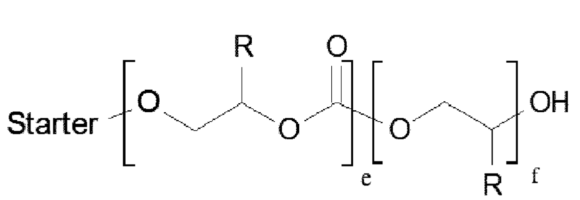

(Ia)

<u>Zu Schritt (α):</u>

Das erfindungsgemäße Verfahren zur Herstellung von Polyethercarbonatpolyolen durch Anlagerung von Alkylenoxiden und Kohlendioxid an H-funktionelle Startersubstanz kann insbesondere dann den Schritt (α) umfassen, wenn das Verfahren in Gegenwart eines Doppelmetallcyanid (DMC)-Katalysators durchgeführt wird.

Bei dem erfindungsgemäßen Verfahren kann zunächst H-funktionelle Startersubstanz und/oder ein Suspensionsmittel, das keine H-funktionellen Gruppen enthält, im Reaktor vorgelegt werden, vorzugsweise wird eine Teilmenge der H-funktionellen Startersubstanz vorgelegt. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als Suspensionsmittel kann auch eine Mischung aus zwei oder mehreren der genannten Suspensionsmittel eingesetzt werden. Höchst bevorzugt wird in Schritt ($\alpha$) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, $\varepsilon$-Caprolacton, Dihydrocumarin, Trimethylencarbonat, Neopentylglykolcarbonat, 3,6-Dimethyl-1,4-dioxane-2,5-dion, Succinsäureanhydrid, Maleinsäureanhydrid und Phthalsäureanhydrid eingesetzt.

In einer Ausführungsform der Erfindung wird in Schritt ($\alpha$) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt ($\alpha$) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im nach Schritt ($\gamma$) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in Schritt ($\alpha$) in das resultierende Gemisch (i) aus einer Teilmenge der H-funktionellen Startersubstanz und/oder Suspensionsmittel und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird in Schritt ($\alpha$) das resultierende Gemisch (i) aus einer Teilmenge der H-funktionellen Startersubstanz(en) und/oder Suspensionsmittel und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt ($\alpha$)

($\alpha$-I) eine Teilmenge der H-funktionellen Startersubstanz und/oder Suspensionsmittel vorgelegt und

($\alpha$-II) die Temperatur der Teilmenge der H-funktionellen Startersubstanz und/oder des Suspensionsmittels auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom

(beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zur Teilmenge der H-funktionellen Startersubstanz und/oder Suspensionsmittel in Schritt (α-I) oder unmittelbar anschließend in Schritt (α-II) zugesetzt wird, und
wobei das Suspensionsmittel keine H-funktionellen Gruppen enthält.

Zu Schritt (β) :

Schritt (β) dient der Aktivierung des DMC-Katalysators und bezieht sich somit auf die Ausführungsform des erfindungsgemäßen Verfahrens in Gegenwart eines DMC-Katalysators. Dieser Schritt (β) wird bevorzugt unter einer Kohlendioxid-Atmosphäre durchgeführt. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben.

Zu Schritt (γ):

Die Dosierung des Kohlendioxids , des Alkylenoxids und gegebenenfalls auch der H-funktionellen Startersubstanz kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Hierbei ist zu berücksichtigen, dass in wenigsten einem der Schritte (α) und (γ) H-funktionelle Startersubstanz eingesetzt wird. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder von H-funktioneller Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell (portionsweise) über jeweils separate Dosierungen (Zugaben) erfolgen oder über eine oder mehrere Dosierungen, wobei das Alkylenoxid bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der H-funktionellen Startersubstanz zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck (absolut) (im Sinne der Erfindung ist der Gesamtdruck (absolut) definiert als die Summe der Partialdrücke des Gasgemisches enthaltend Kohlendioxid und mindestens ein weiteres Gas) bei den jeweiligen Reaktionsbedingungen festgelegt werden. Der Gesamtdruck (absolut) liegt bevorzugt im Bereich von 5 bis 120 bar, besonders bevorzugt 10 bis 110 bar, insbesondere bevorzugt von 20 bis 100 bar für die Copolymerisation zur Herstellung der Polyethercarbonatpolyole. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der H-funktionellen Startersubstanz zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an.

Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierten DMC-Katalysator enthaltende Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierten DMC-Katalysator enthaltende Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen

für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren, wobei in Schritt (γ) H-funktionelle Startersubstanz, Alkylenoxid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-fünktioneller Startersubstanz suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysatorenthaltende Mischung hergestellt, dann werden gemäß Schritt (γ)

(γ1) jeweils eine Teilmenge an H-fünktioneller Startersubstanz, Alkylenoxid und Kohlendioxid zudosiert zum Initiieren der Copolymerisation, und

(γ2) während des Fortschreitens der Copolymerisation jeweils die verbleibende Menge an DMC-Katalysator, H-funktionelle Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben, wobei die Menge vorzugsweise so gewählt ist, dass der Gehalt an DMC-Katalysator in dem bei Schritt (γ) resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch überraschend gefunden worden, dass das Verfahren der vorliegenden Erfindung zur Herstellung großer Mengen des Polyethercarbonatpolyols verwendet werden kann, wobei anfänglich ein gemäß den Schritten (α) und (β) in einer Teilmenge der H-funktionellen Startersubstanz und/oder in Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht-aktivierter DMC-Katalysator in fester Form oder in Form einer Aufschlämmung in H-fünktioneller Startersubstanz oder in Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktand, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Zu Schritt (δ)

Gemäß dem optionalen Schritt (δ) kann das in Schritt (γ) erhaltene Reaktionsgemisch, welches im allgemeinen einen Gehalt von 0,05 Gew.-% bis 10 Gew.-% Alkylenoxid enthält, im Reaktor einer Nachreaktion unterzogen werden oder es kann kontinuierlich in einen Nachreaktor zur Nachreaktion überführt werden, wobei im Wege der Nachreaktion der Gehalt an freiem Alkylenoxid reduziert wird. In Schritt (δ) wird im Wege der Nachreaktion der Gehalt an freiem Alkylenoxid bevorzugt auf weniger als 0,5 g/l, besonders bevorzugt auf weniger als 0,1 g/l im Reaktionsgemisch reduziert.

Wenn das in Schritt (γ) erhaltene Reaktionsgemisch im Reaktor verbleibt, wird vorzugsweise das Reaktionsgemisch zur Nachreaktion 10 min bis 24 h bei einer Temperatur von 60 bis 140 °C, besonders bevorzugt 1 h bis 12 h bei einer Temperatur von 80 bis 130 °C gehalten. Vorzugsweise wird das Reaktionsgemisch dabei gerührt bis der Gehalt an freiem Alkylenoxid auf weniger als 0,5 g/l, besonders bevorzugt auf weniger als 0,1 g/l im Reaktionsgemisch gesunken ist. Durch die Abreaktion von freiem Alkylenoxid und ggf. Kohlendioxid sinkt der Druck im Reaktor während der Nachreaktion im Schritt (δ) im Allgemeinen ab, bis ein konstanter Wert erreicht ist.

Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Als Nachreaktor wird bevorzugt ein Rohrreaktor eingesetzt, wobei beispielsweise ein einzelner Rohrreaktor oder auch eine Kaskade von mehreren, parallel angeordneten oder linear hintereinander geschalteten Rohrreaktoren verwendet werden kann. Bevorzugt liegt die Verweilzeit im Rohrreaktor dabei zwischen 5 min und 10 h, besonders bevorzugt zwischen 10 min und 5 h.

Katalysator

Für das erfindungsgemäße Verfahren wird bevorzugt ein DMC-Katalysator eingesetzt.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die

allgemeine Formel (VI)

$$(Y)_aM'(CN)_b(A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).
Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert. -butylether und 3 -Methyl-3 -oxetan-methanol.
Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure),

Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifizierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC-Katalysator kann zum Beispiel mit Hilfe der Membranfiltration (Nano-, Ultra- oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC-Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC-Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 μm/min - 500 μm/min. bevorzugt im Bereich 50 μm/min - 150 μm/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein.

Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \cdot h)$ bis 5 $m^3/(m^2 \cdot h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

## Alkylenoxid

Allgemein können für das erfindungsgemäße Verfahren Alkylenoxide (Epoxide) mit 2-24 Kohlenstoffatomen

eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3 -Glycidyloxypropyl-methyl-dimethoxysilan, 3 -Glycidyloxypropyl-ethyldiethoxysilan, 3-Glycidyloxypropyltriisopropoxysilan. Vorzugsweise werden als Alkylenoxide 1-Butenoxid, Ethylenoxid und/oder Propylenoxid, insbesondere Propylenoxid eingesetzt.

H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als mono-H-funktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind,

bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahrensschritt (i) erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht $M_n$ im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

<u>Komponente K</u>

Als Komponente K geeignete Verbindungen sind dadurch gekennzeichnet, dass sie mindestens eine Phosphor-Sauerstoff-Wasserstoff-Gruppe enthalten. Vorzugsweise ist Komponente K ausgewählt aus mindestens einer Verbindung aus der Gruppe bestehend aus
Phosphorsäure,
Mono- und Dialkylester der Phosphorsäure,
Mono- und Diarylester der Phosphorsäure,
Mono- und Dialkarylester der Phosphorsäure,

$(NH_4)_2HPO_4$,

Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure, und
Phosphinsäure.

Die Mono- oder Dialkylester von Phosphorsäure sind vorzugsweise die Mono- oder Dialkylester von ortho-Phosphorsäure, Mono, Di- oder Trialkylester von Pyrophosphorsäure und Mono-, Di-, Tri-, Tetra- oder Polyalkylester von Polyphosphorsäure, besonders bevorzugt die jeweiligen Ester mit Alkoholen mit 1 bis 30 C-Atomen. Die Mono- oder Diarylester von Phosphorsäure sind vorzugsweise die Mono- oder Diarylester von ortho-Phosphorsäure, Mono-, Di- oder

Triarylester von Pyrophosphorsäure und Mono-, Di-, Tri-, Tetra- oder Polyarylester von Polyphosphorsäure, besonders bevorzugt die jeweiligen Ester mit Alkoholen mit 6 oder 10 C-Atomen. Die Mono- oder Dialkarylester von Phosphorsäure sind vorzugsweise die Mono- oder Dialkarylester von ortho-Phosphorsäure, Mono, Di- oder Trialkarylester von Pyrophosphorsäure und Mono-, Di-, Tri-, Tetra- oder Polyalkarylester von Polyphosphorsäure, besonders bevorzugt die jeweiligen Ester mit Alkoholen mit 7 bis 30 C-Atomen. Als Komponente K sind beispielsweise die folgenden Verbindungen geeignet: Phosphorsäurediethylester, Phosphorsäuremonoethylester, Phosphorsäuredipropylester, Phosphorsäuremonopropylester, Phosphorsäuredibutylester, Phosphorsäuremonobutylester, Phosphorsäurediphenylester, Phosphorsäuredikresylester, Fructose-1,6-bisphosphat, Glucose-1-phosphat, Phosphorsäure-bis-(4-nitrophenyl)-ester, Phosphorsäuredibenzylester, Phosphorsäure-diethyl-3-butenylester, Phosphorsäure-dihexadecylester, Phosphorsäure-diphenylester und Phosphorsäure-2-hydroxyethylmethacrylatester.
Als Monoalkylester der Phosphonsäure werden bevorzugt die jeweiligen Ester mit Alkoholen mit 1 bis 30 C-Atomen eingesetzt. Als Monoarylester der Phosphonsäure werden bevorzugt die jeweiligen Ester mit Alkoholen mit 6 oder 10 C-Atomen eingesetzt. Als Monoalkarylester der Phosphonsäure werden bevorzugt die jeweiligen Ester mit Alkoholen mit 7 bis 30 C-Atomen eingesetzt.
Als Mono- und Dialkylester der Phosphorigen Säure werden bevorzugt die Ester mit Alkoholen mit 1 bis 30 C-Atomen eingesetzt. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure und Octadecylphosphonsäure. Als Mono- und Diarylester der Phosphorigen Säure werden bevorzugt die jeweiligen Ester mit Alkoholen mit 6 oder 10 C-Atomen eingesetzt. Als Mono- und Dialkarylester der Phosphorigen Säure werden bevorzugt die jeweiligen Ester mit Alkoholen mit 7 bis 30 C-Atomen eingesetzt.
Besonders bevorzugt ist Komponente K ausgewählt aus mindestens einer Verbindung aus der Gruppe bestehend aus Phosphorsäure, Phosphonsäure, und Phosphinsäure. Höchst bevorzugt ist Komponente K Phosphorsäure.
Die in der Beschreibung der Komponente K genannten Alkohole mit 1 bis 30 C-Atomen sind beispielsweise Methanol, Ethanol, Propanol, Butanol, Pentanol, Hexanol, Heptanol, Octanol, Nonanol, Decanol, Dodecanol, Tridecanol, Tetradecanol, Pentadecanol, Hexadecanol, Heptadecanol, Octadecanol, Nonadecanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxy-propionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit.
Des Weiteren sind als Komponente K geeignet Verbindungen des Phosphors, die durch Reaktion mit OH-funktionellen Verbindungen (wie bspw. Wasser) eine oder mehrere Phosphor-Sauerstoff-Wasserstoff-Gruppen ausbilden können. Beispielsweise kommen als solche Verbindungen des Phosphors in Frage Phosphor-(V)-sulfid, Phosphortribromid, Phosphortrichlorid und Phosphortriiodid.
Es können auch beliebige Mischungen der vorgenannten Verbindungen als Komponente K eingesetzt werden. Auch kann Komponente K in Mischung mit Suspensionsmittel oder in Mischung mit Phosphorsäuretrialkylester (insbesondere Phosphorsäuretriethylester) eingesetzt werden.

In einer bevorzugten Ausführungsform ist die Komponente K ausgewählt aus mindestens einer Verbindung der Gruppe bestehend aus Phosphorsäure, Phosphonsäure, Phosphorige Säure, Phosphinsäure, Phosphonigsäure, Phosphinigsäure, Phosphinoxide sowie Salze, Ester, Halogenide und Amide der Phosphorsäure, Phosphonsäure, Phosphorigen Säure, Phosphinsäure, Phosphonigsäure, Phosphinigsäure, Phosphor-(V)-sulfid, Phosphortribromid, Phosphortrichlorid und Phosphortriiodid.

Komponente K kann in einem belieben Schritt des Verfahrens zudosiert werden, wobei die Komponente K bevorzugt so zudosiert wird, dass das aus Schritt (γ) resultierende Reaktionsprodukt eine Menge von 5 bis 2000 ppm, besonders bevorzugt 10 bis 1000 ppm, insbesondere bevorzugt 30 bis 500 ppm enthält. Vorteilhaft ist es, die Komponente K in Schritt (γ) zuzudosieren, insbesondere bevorzugt wird die Komponente K mit H-fünktioneller Startersubstanz gemischt zudosiert. Vorteilhaft ist es auch, Komponente K in Schritt (δ) dem Reaktionsgemisch im Nachreaktor zuzugeben. Vorteilhaft ist es außerdem, die Komponente K erst nach der Nachreaktion (Schritt (δ)) dem erhaltenen Reaktionsgemisch zuzugeben.

In einer bevorzugten Ausführungsform enthält das Polyol in der Mischung in Schritt (γ) eine Komponente K in einem Anteil von 5 bis 2000 ppm, wobei die Komponente K ausgewählt ist aus mindestens einer Verbindung der Gruppe bestehend aus Phosphorsäure, Phosphonsäure, Phosphorige Säure, Phosphinsäure, Phosphonigsäure, Phosphinigsäure, Phosphinoxide sowie Salze, Ester, Halogenide und Amide der Phosphorsäure, Phosphonsäure, Phosphorigen Säure, Phosphinsäure, Phosphonigsäure, Phosphinigsäure, Phosphor-(V)-sulfid, Phosphortribromid, Phosphortrichlorid und Phosphortriiodid.

In einer möglichen Ausführungsform der Erfindung wird während der Nachreaktion (Schritt (δ)) Komponente K in einer Menge von 5 ppm bis 1000 ppm, besonders bevorzugt 10 ppm bis 500 ppm, höchst bevorzugt 20 ppm bis 200 ppm, jeweils bezogen auf das in Schritt (γ) erhaltene Reaktionsgemisch, zugegeben. Die Komponente K wird während der Nachreaktion besonders bevorzugt bei einem Gehalt an freiem Alkylenoxid von 0,1 Gew.-% bis 10 Gew.-%, höchst bevorzugt von 1 Gew.-% bis 10 Gew.-% Alkylenoxid und besonders höchst bevorzugt von 5 Gew.-% bis 10

Gew.-% zugegeben. Bei der Durchführung des erfindungsgemäßen Verfahrens mit Verwendung eines Rohrreaktors zur Nachreaktion in Schritt (δ) wird die Komponente K besonders bevorzugt in der zweiten Hälfte der Wegstrecke zudosiert, die das Reaktionsgemisch im Rohrreaktor durchläuft. Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt.

Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden.

Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

Beispiele:

Die OH-Zahl wurde gemäß der Vorschrift der DIN 53240 bestimmt. Die Angabe der Einheit in "mg KOH/g" bezieht sich auf mg[KOH]/g[Polyethercarbonatpolyol].

Das zahlenmittlere Molekulargewicht ($M_n$) und der Polydispersitätsindex (PDI) der Polyethercarbonatpolyole wurden mittels Gel-Permeations-Chromatographie (GPC) gemessen. Die Messungen erfolgten auf einem Agilent 1200 Series (G1311A Bin Pump, G1313A ALS, G1362A RID), Detektion über RID; Elutionsmittel: Tetrahydrofuran (GPC grade), Flussrate 1.0 mL/min bei 40°C Säulentemperatur; Säulenkombination: 2 x PSS SDV Vorsäule 100 Å (5 μm), 2x PSS SDV 1000 Å (5 μm). Zur Kalibrierung wurde das ReadyCal-Kit Poly(styrene) low im Bereich Mp = 266-66000 Da von "PSS Polymer Standards Service" verwendet. Als Messaufnahme- und Auswertungssoftware wurde das Programmpaket "PSS WinGPC Unity" verwendet. Der Polydispersitätsindex aus gewichtetem ($M_w$) und zahlenmittlerem ($M_n$) Molekulargewicht der Gel-Permeations-Chromatographie ist definiert als $M_w/M_n$.

Der Anteil an eingebautem $CO_2$ im resultierenden Polyethercarbonatpolyol ("eingebautes $CO_2$") sowie das Verhältnis c/1 von Propylencarbonat (cyclisches Carbonat) zu Polyethercarbonatpolyol ("Selektivität") wurden mittels $^1$H-NMR (Firma Bruker, DPX 400, 400 MHz; Pulsprogramm zg30, Wartezeit dl: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt: Cyclisches Carbonat (welches als Nebenprodukt gebildet wurde) Resonanz bei 4,5 ppm, lineares Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (VIII) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(VIII)}$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8) - F(4{,}5)] * 102}{N} * 100\% \quad \text{(IX)}$$

wobei sich der Wert für N ("Nenner" N) nach Formel (X) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \quad \text{(X)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.

Der Gewichtsanteil (in Gew.-%) an cyclischem Carbonat (CC') in der Reaktionsmischung wurde nach Formel (XI) berechnet,

$$CC' = \frac{F(4{,}5) * 102}{N} * 100\% \quad \text{(XI)}$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.

Die Menge an gebildeten cyclischen Propylencarbonat wird über die Bilanzierung der in der Reaktionsmischung vorhandenen Gesamtmenge an cyclischem Propylencarbonat und der als Vorlage eingesetzten Menge an Propylencarbonat bestimmt.

Der Anteil der jeweiligen Komponente am Gasgemisch wurde in den Beispielen rechnerisch durch die Partialdrücke der eingeleiteten Komponenten bestimmt. Der Dampfdruck der Komponenten Propylenoxid und PET-1 wurden nicht berücksichtigt.

<u>Eingesetzte Rohstoffe:</u>

| | |
|---|---|
| DMC-Katalysator: | Ein getrockneter und gemahlener DMC-Katalysator (Doppelmetallcyanid-Katalysator), hergestellt gemäß Beispiel 6 von WO 2001/80994-A1 |
| PET-1 | bifunktionelles Polyetherpolyol mit einer OH-Zahl von 260 mg KOH/g und einem zahlenmittleren Molekulargewicht von etwa 430 g/mol (Arcol® Polyol 1004, Covestro Deutschland AG) |

Propylenoxid (≥99.5 % Sigma Aldrich)
$CO_2$ (Linde, 4.5)
CO (Linde, 4.7)
$N_2$ (Linde, 5.0)

**Herstellung von Polyethercarbonatpolyolen:**

<u>Beispiel 1 (Vergleich):</u>

(α): In einen 300 mL Stahlreaktor wird der Starter (PET-1, 50,0 g, 0,116 mol, 1,00 Äq.) und DMC-Katalysator (0,058 g, 500 ppm) vorgelegt und der Reaktor verschlossen. Das Gemisch wird im Vakuum unter leichtem $N_2$-Strom bei 130 °C über 20 min von flüchtigen Komponenten befreit. Anschließend wird der Reaktor mit $CO_2$ auf 25 bar eingestellt.

(β): Es erfolgen zwei Aktivierungssequenzen mit Propylenoxid (2x 5.0 g, 0,172 mol, 1,48 Äq.). Hierfür wird die jeweilige Portion Propylenoxid mit 10 mL/min zugegeben und abgewartet bis eine Umsetzung einsetzt (Temperaturspitze / Druckabfall).

(γ): Anschließend wird die Temperatur auf 115 °C reduziert und es werden 55,7 g (0,960 mol; 8,28 Äq.) Propylenoxid in 180 min (0,310 g/min) kontinuierlich zugegeben. $CO_2$ wird zugeführt, sodass der Druck konstant bleibt.

(δ): Nach der kontinuierlichen Zugabe werden weitere 60 min bei 115 °C und konstantem Druck gerührt. Nach der Abkühlung wird eine Probe für $^1$H NMR Analytik und GPC-Analytik entnommen.

Beispiel 2:

(α): In einen 300 mL Stahlreaktor wird der Starter (PET-1, 50,0 g, 0,116 mol, 1,00 Äq.) und DMC-Katalysator (0,058 g, 500 ppm) vorgelegt und der Reaktor verschlossen. Das Gemisch wird im Vakuum unter leichtem $N_2$-Strom bei 130 °C über 20 min von flüchtigen Komponenten befreit. Anschließend wird der Reaktor mit $CO_2$ auf 25 bar eingestellt. Der Reaktor wird mit weiteren 25 bar CO auf insgesamt 50 bar Gesamtdruck beaufschlagt, wodurch ein $CO_2$-Partialdruck $p_{CO2}$ von 25 bar resultiert (entspricht 50 Vol.-% $CO_2$).

(β): Es erfolgen zwei Aktivierungssequenzen mit Propylenoxid (2x 5.0 g, 0,172 mol, 1,48 Äq.). Hierfür wird die jeweilige Portion Propylenoxid mit 10 mL/min zugegeben und abgewartet bis eine Umsetzung einsetzt (Temperaturspitze / Druckabfall).

(γ): Anschließend wird die Temperatur auf 115 °C reduziert und es werden 55,7 g (0,960 mol; 8,28 Äq.) Propylenoxid in 180 min (0,310 g/min) kontinuierlich zugegeben. $CO_2$ wird zugeführt, sodass der Druck konstant bleibt.

(δ): Nach der kontinuierlichen Zugabe werden weitere 60 min bei 115 °C und konstantem Druck gerührt. Nach der Abkühlung wird eine Probe für $^1$H NMR Analytik und GPC-Analytik entnommen.

Beispiel 3:

(α): In einen 300 mL Stahlreaktor wird der Starter (PET-1, 50,0 g, 0,116 mol, 1,00 Äq.) und DMC-Katalysator (0,058 g, 500 ppm) vorgelegt und der Reaktor verschlossen. Das Gemisch wird im Vakuum unter leichtem $N_2$-Strom bei 130 °C über 20 min von flüchtigen Komponenten befreit. Anschließend wird der Reaktor mit $CO_2$ auf 25 bar eingestellt. Der Reaktor wird mit weiteren 25 bar $N_2$ auf insgesamt 50 bar Gesamtdruck beaufschlagt, wodurch ein $CO_2$-Partialdruck $p_{CO2}$ von 25 bar resultiert (entspricht 50 Vol.-% $CO_2$).

(β): Es erfolgen zwei Aktivierungssequenzen mit Propylenoxid (2x 5.0 g, 0,172 mol, 1,48 Äq.). Hierfür wird die jeweilige Portion Propylenoxid mit 10 mL/min zugegeben und abgewartet bis eine Umsetzung einsetzt (Temperaturspitze / Druckabfall).

(γ): Anschließend wird die Temperatur auf 115 °C reduziert und es werden 55,7 g (0,960 mol; 8,28 Äq.) Propylenoxid in 180 min (0,310 g/min) kontinuierlich zugegeben. $CO_2$ wird zugeführt, sodass der Druck konstant bleibt.

(δ): Nach der kontinuierlichen Zugabe werden weitere 60 min bei 115 °C und konstantem Druck gerührt. Nach der Abkühlung wird eine Probe für $^1$H NMR Analytik und GPC-Analytik entnommen.

Beispiel 4 (Vergleich):

(α): In einen 300 mL Stahlreaktor wird der Starter (PET-1, 50,0 g, 0,116 mol, 1,00 Äq.) und DMC-Katalysator (0,058 g, 500 ppm) vorgelegt und der Reaktor verschlossen. Das Gemisch wird im Vakuum unter leichtem $N_2$-Strom bei 130 °C über 20 min von flüchtigen Komponenten befreit. Anschließend wird der Reaktor mit $CO_2$ auf 50 bar eingestellt.

(β): Es erfolgen zwei Aktivierungssequenzen mit Propylenoxid (2x 5.0 g, 0,172 mol, 1,48 Äq.). Hierfür wird die jeweilige Portion Propylenoxid mit 10 mL/min zugegeben und abgewartet bis eine Umsetzung einsetzt (Temperaturspitze / Druckabfall).

(γ): Anschließend wird die Temperatur auf 115 °C reduziert und es werden 55,7 g (0,960 mol; 8,28 Äq.) Propylenoxid in 180 min (0,310 g/min) kontinuierlich zugegeben. $CO_2$ wird zugeführt, sodass der Druck konstant bleibt.

(δ): Nach der kontinuierlichen Zugabe werden weitere 60 min bei 115 °C und konstantem Druck gerührt. Nach der Abkühlung wird eine Probe für $^1H$ NMR Analytik und GPC-Analytik entnommen.

Beispiel 5 (Vergleich):

(α): In einen 2.0 L Stahlreaktor wird der Starter (PET-1, 150,0 g, 0,347 mol, 1,00 Äq.) und DMC-Katalysator (0,208 g, 300 ppm) vorgelegt und der Reaktor verschlossen. Das Gemisch wird im Vakuum unter leichtem $N_2$-Strom bei 115 °C über 30 min von flüchtigen Komponenten befreit. Anschließend wird der Reaktor mit $N_2$ auf 0,5 bar Überdruck eingestellt.

(β): Es erfolgen zwei Aktivierungssequenzen mit Propylenoxid (2x 15.0 g, 0,516 mol, 1,49 Äq.). Hierfür wird die jeweilige Portion Propylenoxid mit 10 mL/min zugegeben und abgewartet bis eine Umsetzung einsetzt (Temperaturspitze / Druckabfall). Anschließend wird der Reaktor mit $CO_2$ auf 14 bar Gesamtdruck beaufschlagt, wodurch ein $CO_2$-Partialdruck $p_{CO2}$ von 12,5 bar resultiert (entspricht 89 Vol.-% $CO_2$). Es werden zwei weitere Aktivierungssequenzen unter $CO_2$-Atmosphäre durchgeführt. Hierzu wird Propylenoxid (2x 15.0 g, 0,516 mol, 1,49 Äq.) jeweils mit 10 mL/min zugegeben und abgewartet bis eine Umsetzung einsetzt (Temperaturspitze / Druckabfall).

(γ): Anschließend wird die Temperatur auf 107 °C reduziert und es werden 484 g (8,33 mol; 24,0 Äq.) Propylenoxid in 180 min (2,86 g/min) kontinuierlich zugegeben. $CO_2$ wird zugeführt, sodass der Druck konstant bleibt.

(δ): Nach der kontinuierlichen Zugabe werden weitere 60 min bei 107 °C und konstantem Druck gerührt. Nach der Abkühlung wird eine Probe für $^1H$ NMR Analytik und GPC-Analytik entnommen.

Beispiel 6:

(α): In einen 2.0 L Stahlreaktor wird der Starter (PET-1, 150,0 g, 0,347 mol, 1,00 Äq.) und DMC-Katalysator (0,208 g, 300 ppm) vorgelegt und der Reaktor verschlossen. Das Gemisch wird im Vakuum unter leichtem $N_2$-Strom bei 115 °C über 30 min von flüchtigen Komponenten befreit. Anschließend wird der Reaktor mit $N_2$ auf 0,5 bar Überdruck eingestellt.

(β): Es erfolgen zwei Aktivierungssequenzen mit Propylenoxid (2x 15.0 g, 0,516 mol, 1,49 Äq.). Hierfür wird die jeweilige Portion Propylenoxid mit 10 mL/min zugegeben und abgewartet bis eine Umsetzung einsetzt (Temperaturspitze / Druckabfall). Anschließend wird der Reaktor mit $CO_2$ auf 14 bar Gesamtdruck beaufschlagt. Mit $N_2$ wird anschließend der Gesamtdruck auf 25 bar gebracht, wodurch ein $CO_2$-Partialdruck $p_{CO2}$ von 12,5 bar resultiert (entspricht 50 Vol.-% $CO_2$). Es werden zwei weitere Aktivierungssequenzen unter $CO_2$-Atmosphäre durchgeführt. Hierzu wird Propylenoxid (2x 15.0 g, 0,516 mol, 1,49 Äq.) jeweils mit 10 mL/min zugegeben und abgewartet bis eine Umsetzung einsetzt (Temperaturspitze / Druckabfall).

(γ): Anschließend wird die Temperatur auf 107 °C reduziert und es werden 484 g (8,33 mol; 24,0 Äq.) Propylenoxid in 180 min (2,69 g/min) kontinuierlich zugegeben. Parallel zur kontinuierlichen Dosierung von PO werden $CO_2$ und $N_2$ mit jeweils 300 mL/min in die Flüssigphase dosiert. Der Druck wird über ein federbelastetes Druckhalteventil konstant gehalten, wobei überschüssiges Gas über den Kopf des Reaktors entweichen kann.

(δ): Nach der kontinuierlichen Zugabe von PO werden weitere 60 min bei 107 °C und konstantem Druck gerührt. Nach der Abkühlung wird eine Probe für $^1H$ NMR Analytik und GPC-Analytik entnommen.

Beispiel 7:

(α): In einen 2.0 L Stahlreaktor wird der Starter (PET-1, 150,0 g, 0,347 mol, 1,00 Äq.) und DMC-Katalysator (0,208 g, 300 ppm) vorgelegt und der Reaktor verschlossen. Das Gemisch wird im Vakuum unter leichtem $N_2$-Strom bei 115 °C über 30 min von flüchtigen Komponenten befreit. Anschließend wird der Reaktor mit $N_2$ auf 0,5 bar Überdruck eingestellt.

(β): Es erfolgen zwei Aktivierungssequenzen mit Propylenoxid (2x 15.0 g, 0,516 mol, 1,49 Äq.). Hierfür wird die jeweilige Portion Propylenoxid mit 10 mL/min zugegeben und abgewartet bis eine Umsetzung einsetzt (Temperaturspitze / Druckabfall). Anschließend wird der Reaktor mit $CO_2$ auf 14 bar Gesamtdruck beaufschlagt. Mit $N_2$ wird anschließend der Gesamtdruck auf 37,5 bar gebracht, wodurch ein $CO_2$-Partialdruck $p_{CO2}$ von 12,5 bar resultiert (entspricht 33 Vol.-% $CO_2$). Es werden zwei weitere Aktivierungssequenzen unter $CO_2$-Atmosphäre durchgeführt. Hierzu wird Propylenoxid (2x 15.0 g, 0,516 mol, 1,49 Äq.) jeweils mit 10 mL/min zugegeben und abgewartet bis eine Umsetzung einsetzt (Temperaturspitze / Druckabfall).

(γ): Anschließend wird die Temperatur auf 107 °C reduziert und es werden 484 g (8,33 mol; 24,0 Äq.) Propylenoxid in 180 min (2,69 g/min) kontinuierlich zugegeben. Parallel zur kontinuierlichen Dosierung von PO werden $CO_2$ (300 mL/min) und $N_2$ (600 mL/min) in die Flüssigphase dosiert. Der Druck wird über ein federbelastetes Druckhalteventil konstant gehalten, wobei überschüssiges Gas über den Kopf des Reaktors entweichen kann.

(δ): Nach der kontinuierlichen Zugabe von PO werden weitere 60 min bei 107 °C und konstantem Druck gerührt. Nach der Abkühlung wird eine Probe für $^1H$ NMR Analytik und GPC-Analytik entnommen.

**Tabelle 1:** DMC-katalysierte Synthese von Polyethercarbonatpolyolen mit der Verwendung von $CO_2$-Gasgemischen.

| Beispiele | Einheit | 1* | 2 | 3 | 4* | 5* | 6 | 7 |
|---|---|---|---|---|---|---|---|---|
| $P_{total}$ | [bar] | 25 | 50 | 50 | 50 | 14 | 25 | 37,5 |
| $P_{CO2}$ | [bar] | 25 | 25 | 25 | 50 | 12,5 | 12,5 | 12,5 |
| $p_{CO}$ | [bar] | 0 | 25 | 0 | 0 | 0 | 0 | 0 |
| $P_{N2}$ | [bar] | 0 | 0 | 25 | 0 | 1,5 | 12,5 | 25 |
| Anteile $CO_2$[1] | [Vol.-%] | 100 | 50 | 50 | 100 | 89 | 50 | 33 |
| c/l | - | 0,99 | 0,88 | 0,71 | 1,14 | 0,32 | 0,26 | 0,27 |
| $M_n$ | [kg/mol] | 1,23 | 1,27 | 1,25 | 1,15 | 2,94 | 2,94 | 2,88 |
| PDI | - | 1,04 | 1,03 | 1,03 | 1,05 | 1,07 | 1,04 | 1,04 |

*Vergleichsbeispiel
[1] Bestimmung durch Partialdruck des $CO_2$ im Gasgemisch

Die Beispiele 1 bis 3 zeigen ein Verfahren zur Herstellung von Polyethercarbonatpolyolen, wobei die gleiche Menge an Kohlenstoffdioxid eingesetzt wird, nämlich ein Partialdruck $P_{CO2}$ von 25 bar. In Beispiel 1 erfolgt die Anlagerung von Alkylenoxid und Kohlenstoffdioxid unter einer reinen Kohlenstoffdioxid-Atmosphäre, wobei eine Selektivität von 0,99 erhalten wird. Bei den erfindungsgemäßen Verfahren in Beispiel 2 und 3 führt die Anlagerung unter einer Atmosphäre aus einem Gasgemisch aus Kohlenstoffdioxid und mindestens einem weiteren Gas zu einer Verbesserung der Selektivität auf 0,88 (Beispiel 2) bzw. 0,71 (Beispiel 3). Durch die Verwendung eines Gasgemisches mit gleicher Menge an Kohlenstoffdioxid wie in Beispiel 1, erhöht sich der Druck während der Anlagerung bei den Beispielen 2 und 3. In Beispiel 4 ist deshalb die Anlagerung von Alkylenoxid und Kohlenstoffdioxid unter reiner Kohlenstoffdioxid-Atmosphäre und bei gleichem Druck wie in den Beispielen 2 und 3 durchgeführt worden. Beispiel 4 zeigt, dass auch beim gleichen Druck das erfindungsgemäße Verfahren zu einer Verbesserung der Selektivität führt.

Der Vergleich zwischen den Beispielen 5 bis 7 zeigt, dass der erfindungsgemäße Anteil mindestens eines

weiteren Gases im Gasgemisch zu einer Verbesserung der Selektivität bei der Herstellung von Polyethercarbonatpolyolen führt. Bei einem Anteil von etwa 11 Vol.-% eines weiteren Gases im Gasgemisch von Beispiel 5 beträgt die Selektivität 0,32, wobei die Erhöhung des Anteils des weiteren Gases auf 50 Vol.-% bzw. 67 Vol.-% zu einer Selektivität von 0,26 bzw. 0,27 führt.

**Patentansprüche**

1. Verfahren zur Herstellung von Polyethercarbonatpolyolen durch Anlagerung von Alkylenoxid und Kohlendioxid an H-funktioneller Startersubstanz in Gegenwart eines DMC-Katalysators oder eines Metallkomplexkatalysators auf Basis der Metalle Zink und/oder Cobalt, **dadurch gekennzeichnet, dass**
die Anlagerung unter einer Atmosphäre aus einem Gasgemisch enthaltend 12,0 Vol.-% bis 85,0 Vol.-% Kohlendioxid und 15,0 Vol.-% bis 88,0 Vol.-% mindestens eines weiteren Gases, jeweils bezogen auf das Volumen des Gasgemisches, erfolgt.

2. Verfahren gemäß Anspruch 1, **dadurch gekennzeichnet dass** das Gasgemisch einen Anteil von 20,0 Vol.-% bis 70,0 Vol.-% Kohlendioxid und 30,0 Vol.-% bis 80,0 Vol.-% mindestens eines weiteren Gases enthält, jeweils bezogen auf das Volumen des Gasgemisches.

3. Verfahren gemäß Anspruch 1, **dadurch gekennzeichnet dass** das Gasgemisch einen Anteil von 20,0 Vol.-% bis 60,0 Vol.-% Kohlendioxid und 40,0 Vol.-% bis 80,0 Vol.-% mindestens eines weiteren Gases enthält, jeweils bezogen auf das Volumen des Gasgemisches.

4. Verfahren gemäß einem der Ansprüche 1 bis 3, **dadurch gekennzeichnet, dass** das weitere Gas mindestens eine Verbindung der Gruppe bestehend aus Kohlenstoffmonoxid, Stickstoff, Edelgase und Wasserstoff enthält.

5. Verfahren gemäß Anspruch 4, **dadurch gekennzeichnet, dass** das weitere Gas 10,0 Vol.-% oder weniger, bezogen auf das Volumen des Gasgemisches, eines oder mehrerer Gase enthält die unterschiedlich zu Kohlenstoffmonoxid, Stickstoff, Edelgase und Wasserstoff sind.

6. Verfahren gemäß Anspruch 4, **dadurch gekennzeichnet, dass** das weitere Gas 1,0 Vol.-% oder weniger, bezogen auf das Volumen des Gasgemisches, eines oder mehrerer Gase enthält die unterschiedlich zu Kohlenstoffmonoxid, Stickstoff, Edelgase und Wasserstoff sind.

7. Verfahren gemäß einem der Ansprüche 1 bis 6, **dadurch gekennzeichnet, dass**

   ($\alpha$) gegebenenfalls eine Teilmenge der H-funktionellen Startersubstanz und/oder Suspensionsmittel, das keine H-funktionellen Gruppen enthält, in einem Reaktor jeweils gegebenenfalls gemeinsam mit DMC-Katalysator und/oder einem Metallkomplexkatalysator auf Basis der Metalle Zink und/oder Cobalt vorgelegt wird
   ($\beta$) gegebenenfalls zu dem Gemisch aus Schritt ($\alpha$) eine Teilmenge an Alkylenoxid bei Temperaturen von 90 bis 150°C zugegeben wird, und wobei dann die Zugabe des Alkylenoxids unterbrochen wird ("Aktivierung"),
   ($\gamma$) Alkylenoxid und Kohlendioxid an eine H-funktionelle Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird ("Copolymerisation"),
   ($\delta$) gegebenenfalls das in Schritt ($\gamma$) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird.

8. Verfahren gemäß einem der Ansprüche 1 bis 7, **dadurch gekennzeichnet, dass** das Verfahren in Gegenwart mindestens eines DMC-Katalysators durchgeführt wird.

9. Verfahren gemäß einem der Ansprüche 1 bis 8, **dadurch gekennzeichnet, dass**
($\gamma$) H-funktionelle Startersubstanz, Alkylenoxid und Kohlendioxid während der Reaktion kontinuierlich in den Reaktor zudosiert werden.

10. Verfahren gemäß Anspruch 9 **dadurch gekennzeichnet, dass** das Verfahren in Gegenwart mindestens eines DMC-Katalysators durchgeführt wird und wobei in Schritt ($\gamma$) zusätzlich DMC-Katalysator kontinuierlich in den Reaktor

dosiert wird und das resultierende Reaktionsgemisch kontinuierlich aus dem Reaktor entfernt wird.

**11.** Verfahren gemäß einem der Ansprüche 1 bis 10, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

Europäisches Patentamt
European Patent Office
Office européen des brevets

# EUROPÄISCHER RECHERCHENBERICHT

Nummer der Anmeldung
EP 20 17 8763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2017/158114 A1 (COVESTRO DEUTSCHLAND AG [DE]) 21. September 2017 (2017-09-21)<br>* Anspruch 1; Beispiel 1 *<br>----- | 1-11 | INV.<br>C08G64/34<br>C08G65/26 |
| | | | RECHERCHIERTE SACHGEBIETE (IPC) |
| | | | C08G<br>C09J |

Der vorliegende Recherchenbericht wurde für alle Patentansprüche erstellt

1

| Recherchenort | Abschlußdatum der Recherche | Prüfer |
|---|---|---|
| Den Haag | 15. September 2020 | Adigbli, Francis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 17 8763

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2020

| Im Recherchenbericht angeführtes Patentdokument | Datum der Veröffentlichung | Mitglied(er) der Patentfamilie | Datum der Veröffentlichung |
|---|---|---|---|
| WO 2017158114 A1 | 21-09-2017 | CN 109071791 A | 21-12-2018 |
| | | EP 3219741 A1 | 20-09-2017 |
| | | EP 3430071 A1 | 23-01-2019 |
| | | JP 2019508563 A | 28-03-2019 |
| | | KR 20180127343 A | 28-11-2018 |
| | | SG 11201806543V A | 27-09-2018 |
| | | US 2019085121 A1 | 21-03-2019 |
| | | WO 2017158114 A1 | 21-09-2017 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2017158114 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- EP 1359177 A
- WO 200180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931